(19) Europäisches Patentamt
European Patent Office
Office européen des brevets

(11) **EP 3 114 898 B1**

(12) **EUROPÄISCHE PATENTSCHRIFT**

(45) Veröffentlichungstag und Bekanntmachung des Hinweises auf die Patenterteilung:
**05.12.2018  Patentblatt 2018/49**

(21) Anmeldenummer: **15702500.8**

(22) Anmeldetag: **05.02.2015**

(51) Int Cl.:
**H02M 3/335** *(2006.01)*    **H05B 33/08** *(2006.01)*

(86) Internationale Anmeldenummer:
**PCT/EP2015/052381**

(87) Internationale Veröffentlichungsnummer:
**WO 2015/132032 (11.09.2015 Gazette 2015/36)**

(54) **LED-TREIBER**

LED DRIVER

LED-DRIVER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2014  DE 102014204127**

(43) Veröffentlichungstag der Anmeldung:
**11.01.2017  Patentblatt 2017/02**

(73) Patentinhaber: **Tridonic GmbH & Co. KG 6851 Dornbirn (AT)**

(72) Erfinder:
- **MITTERBACHER, Andre**
  **6850 Dornbirn (AT)**
- **DALBY, Paul**
  **Middlesbrough**
  **Cleveland TS5 7LP (GB)**
- **MAKWANA, Deepak**
  **Newcaste Upon Tyne**
  **Tyne and Wear NE4 8UB (GB)**
- **BELL, Wayne**
  **Broompark**
  **Durham DH7 7RS (GB)**

(74) Vertreter: **Rupp, Christian Mitscherlich PartmbB Patent- und Rechtsanwälte Sonnenstraße 33 80331 München (DE)**

(56) Entgegenhaltungen:
**EP-A1- 2 645 819    US-A1- 2004 052 095**
**US-A1- 2013 257 305**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Betriebsgerät zur Ansteuerung von Leuchtmitteln wie z.B. LED-Strecken, sowie eine Steuereinheit zur Ansteuerung eines solchen Betriebsgeräts. Zusätzlich betrifft die Erfindung auch ein Verfahren zur Ansteuerung von Leuchtmitteln wie z.B. LED-Strecken.

Bekannt ist die Verwendung eines Flyback-Konverters zum Betrieb eines LED-Moduls. Der Flyback-Konverter ist Teil eines entsprechenden Betriebsgeräts und wird z.B. im Critical Conduction Modus, auch Borderline Modus genannt, betrieben. Dabei wird der Schalter des Flyback-Konverters primärseitig eingeschaltet, sodass in dieser Einschalt-Phase der primärseitige Strom konstant ansteigt. Dies verursacht bei einer Erfassungswicklung am Flyback-Konverter eine konstante negative Spannung.

Wenn der Strom einen vorgegebenen Peak-Wert erreicht hat, wird der Schalter abgeschaltet. Nach dem Abschalten springt die Spannung an der Erfassungswicklung auf einen positiven Wert, oszilliert während einer gewissen Zeitdauer und pendelt sich dann auf einen Spannungswert ein, der der Ausgangsspannung Vout entspricht.

Der sekundärseitige Strom nimmt während dieser Abschalt-Phase linear ab. Wenn der sekundärseitige Strom den Nullpunkt erreicht, sinkt die eingeschwungene und vorzugsweise lineare Spannung an der Erfassungswicklung. Beim Nullpunkt des sekundärseitigen Stroms knickt die Spannung an der Erfassungswicklung somit ab. Im Critical Conduction Modus ist es nunmehr erforderlich, den Nullpunkt des sekundärseitigen Stroms erfassen zu können, um dann den Schalter des Flyback-Konverters wieder einzuschalten.

Druckschrift US20130257305 A1 beschreibt ein Betriebsgerät mit einem Null-Spannungsdetektor, der dem Nulldurchgang eines in einer Hilfswicklung induzierten Spannungswertes detektiert, wobei die Hilfswicklung eine Spannung erfasst, die repräsentativ für die Ausgangsspannung ist. Aus dem Stand der Technik ist es bekannt, die Spannung an der Erfassungswicklung zu überwachen und mit einer niedrigen vorgegebenen Wiedereinschaltschwelle zu vergleichen. Wenn die Spannung an der Erfassungswicklung diesen Schwellenwert unterschreitet, wird erkannt, dass der sekundärseitige Strom auf Null gesunken ist und der primärseitige Schalter wird wieder eingeschaltet.

Das Problem bei der Technik gemäß dem Stand der Technik ist nunmehr, dass die eigentliche Zeitdauer bis zum Nulldurchgang des sekundärseitigen Strom, nicht genau erfasst werden kann, wenn eine solche feste Komparatorschwelle gewählt ist.

Die Erfindung setzt nunmehr daran an, dass eine adaptive Wiedereinschaltschwelle als Detektionsschwelle gewählt wird. Insbesondere kann diese Wiedereinschaltschwelle genauer das Abknicken der Erfassungsspannung erfassen, indem die bei ausgeschaltenem Schalter eingeschwungene Spannung abgetastet wird und abhängig davon, d.h. als Funktion der abgetasteten Spannung die Abschaltschwelle gewählt wird. Die eingeschwungene Spannung, die also der Ausgangsspannung des Flyback-Konverters entspricht, hängt von der konkreten Ausgestaltung des LED-Moduls ab, insbesondere von der Anzahl der LEDs in dem LED-Modul.

Gemäß der Erfindung ist ein Betriebsgerät nach Anspruch 1 vorgesehen. Vorteilhafte Ausführungsformen des erfindungsgemäßen Betriebsgerätes sind durch die abhängigen Ansprüche definiert.

Gemäß dem Aspekt der Erfindung ist auch ein Verfahren nach Anspruch 8 vorgesehen. Eine vorteilhafte Ausführungsform des erfindungsgemäßen Verfahrens ist durch die abhängige Anspruch definiert.

Die Beschreibung der Erfindung erfolgt nun auch mit Bezug auf die beigefügten Zeichnungen. Dabei zeigen:

Fig. 1 schematisch das Schaltbild eines Ausführungsbeispiels eines erfindungsgemäßen Betriebsgeräts für Leuchtmittel,

Fig. 2 den Verlauf von elektrischen Größen des erfindungsgemäßen Betriebsgeräts, und

Fig. 3 den Verlauf von elektrischen Größen des erfindungsgemäßen Betriebsgeräts gemäß einer alternativen Ausführungsform.

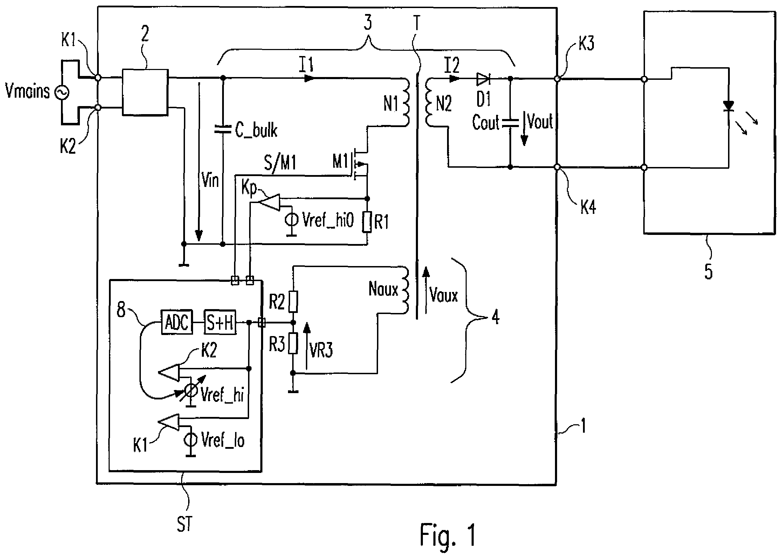

Fig. 1 zeigt schematisch das Schaltbild eines ersten Ausführungsbeispiels eines erfindungsgemäßen Betriebsgeräts für Leuchtmittel.

Das in Fig. 1 in vereinfachter Weise dargestellte und allgemein mit dem Bezugszeichen 1 versehene erfindungsgemäße Betriebsgerät ist im dargestellten Ausführungsbeispiel zum Betreiben von Leuchtmitteln, insbesondere zum Betreiben eines LED-Moduls 5, vorgesehen.

Das Betriebsgerät 1 ist eingangsseitig über Eingangsklemmen K1, K2 an ein Stromversorgungsnetz angeschlossen, welches eine Netzversorgungsspannung Vmains zur Verfügung stellt. Die Netzversorgungsspannung Vmains stellt hier ein Beispiel für eine Wechselspannung zum Speisen des Betriebsgeräts dar.

Das Betriebsgerät 1 weist vorzugsweise eine Eingangsstufe 2, einen Konverter 3, eine Erfassungseinheit 4 und eine Steuereinheit ST auf. Die Eingangsstufe 2 ist optional und kann zum Filtern der Netzversorgungsspannung Vmains dienen. Hierzu kann die Eingangsstufe 2 Filter-Bauteile bzw. -Schaltungen (nicht gezeigt) aufweisen. Zusätzlich oder alternativ dazu kann die Eingangsstufe 2 eine Gleichrichtung der gegebenenfalls gefilterten Netzversorgungsspannung Vmains durchführen, z.B. durch einen Vollbrückengleichrichter mit vier Dioden zur Umwandlung der Wechselspannung in eine pulsierende Gleichspannung. Der Ausgang der gegebenenfalls vorhandenen Eingangsstufe 2 ist die Spannung Vin und wird dem Konverter 3 zugeführt. Diese Spannung Vin ist vorzugsweise eine gleichgerichtete Wechselspannung, insbesondere eine einweggleichgerichtete Wechselspannung.

Der Konverter 3 ist im dargestellten Ausführungsbeispiel durch einen sogenannten Flyback-Konverter gebildet, der auch als Sperrwandler oder Hoch-Tiefsetzsteller bezeichnet werden kann. Im Allgemeinen ist der Konverter 3 ein Spannungswandler bzw. Gleichspannungswandler und kann auch alternative Topologien aufweisen, insbesondere Topologien aufweisend eine galvanische Trennung. Der Flyback-Konverter ist im Ausführungsbeispiel der Fig. 1 also als Beispiel für einen durch mindestens einen Schalter M1 getakteten potentialgetrennten Konverter angeführt, der zur Potentialtrennung einen Übertrager aufweisen kann. Indessen kann das Betriebsgerät 1 stattdessen auch andere getaktete Schaltungen, insbesondere mit galvanischer Trennung aufweisen, wie z.B. einen Durchflusswandler, auch Forward-Konverter genannt, oder einen Gegentaktwandler, auch Push-Pull-Konverter genannt, wie z.B. einen Gegentaktwandler mit Halbbrücken- oder Vollbrückenansteuerung.

Der Flyback-Konverter 3 weist einen Übertrager T in Form beispielsweise eines Transformators mit einer Primärwicklung N1 und einer Sekundärwicklung N2 auf. Der Übertrager T dient zur Potentialtrennung zwischen einer Primärseite und einer Sekundärseite. Der Übertrager T dient zur Übertragung von elektrischer Energie von der Primärwicklung N1 zur Sekundärwicklung N2 bzw. von der Primärseite zu der Sekundärseite. Vorzugsweise wird die Energie in zwei unterschiedliche Phasen jeweils primärseitig aufgenommen und sekundärseitig wieder abgegeben. Ein Übertrager in Form eines Transformators weist deswegen zur Zwischenspeicherung der Energie zwischen den zwei Phasen vorzugsweise einen Luftspalt auf.

Der Flyback-Konverter 3 umfasst einen steuerbaren Schalter M1. In bekannter Weise kann durch ein entsprechendes abwechselndes Öffnen und Schließen des Schalters M1 die von der eingangsseitig am Flyback-Konverter anliegenden Spannung Vin zur Verfügung gestellte Energie auf die Sekundärseite des Flyback-Konverters 3 übertragen werden. Diese auf die Sekundärseite übertragene Energie kann zum Betreiben des sekundärseitig anschließbaren LED-Moduls 5 verwendet werden. Die Energieübertragung findet dabei im geöffneten Zustand des Schalters M1 statt, wobei hierzu auf der Ausgangsseite des Flyback-Konverters 3 ferner eine Diode D1 vorgesehen ist.

Der Schalter M1 ist in Serie zu der Primärwicklung N1 geschaltet, so dass durch Schließen des steuerbaren Schalters M1 ein primärseitiger Strom durch diese Primärwicklung N1 fließen kann. Bei geöffnetem Schalter S1 kann hingegen kein Strom durch diese Primärwicklung N1 fließen. Der Schalter M1 ist beispielsweise als steuerbarer Transistor ausgestaltet, insbesondere als FET oder MOSFET-Transistor. Der Schalter M1 wird von der Steuereinheit ST des Betriebsgeräts gesteuert. Vorzugsweise befindet sich diese Steuereinheit ST auf der Primärseite des Flyback-Konverters bzw. des Transformators T.

Im dargestellten Ausführungsbeispiel ist der Schalter M1 ein MOSFET-Transistor, wobei der Gate-Eingang des Schalters M1 als Steuereingang ausgestaltet ist und mit der Steuereinheit ST verbunden ist. Der Schalter M1 wird über den Steuereingang von einem Steuersignal S/M1, das von der Steuereinheit ST erzeugt wird, ein- und ausgeschaltet. Der Schalter M1 der Fig. 1 ist insbesondere als p-Kanal ausgestaltet, wobei der Drain-Anschluss mit einer Klemme der Primärwicklung N1 verbunden ist. Der Source-Anschluss des Schalters M1 ist vorzugsweise mit Masse, d.h. mit der primärseitigen Masse, gekoppelt.

Eingangsseitig weist der Flyback-Konverter 3 einen Kondensator C_bulk auf, an welchem die Eingangsspannung Vin des Flyback-Konverters 3 anliegt. Die auf der Sekundärseite vorgesehene Diode D1 ist in Serie mit der Sekundärwicklung N2 geschaltet. Parallel zu der Reihenschaltung der Diode D1 und der Sekundärwicklung N2 ist ein Kondensator Cout vorgesehen. Die Spannung an diesem Kondensator Cout bildet die Ausgangsspannung Vout des Flyback-Konverters 3, die wiederum an zwei Ausgangsklemmen K3, K4 zur Verfügung gestellt wird. An diese Ausgangsklemmen K3, K4 kann das LED-Modul 5 angeschlossen werden. Das LED-Modul 5 weist eine oder mehrere LEDs, vorzugsweise eine LED-Strecke aufweisend mehrere in Serie geschaltete LEDs, auf. Das LED-Modul 5 kann auch eine Parallel-Schaltung von mehreren LED-Strecken oder eine gemischte Schaltung aus parallel und seriell geschalteten LEDs aufweisen.

Vorzugsweise kann zwischen dem Schalter M1 und Masse ein Messwiderstand R1 vorgesehen sein. An diesem Messwiderstand R1 kann ein Signal abgegriffen werden, wobei dieses Signal VR1 den Strom 11 durch die Primärwicklung M1 wiedergibt. Dieses gemessene Signal wird von einem Komparator Kp mit einem Referenzsignal bzw. mit einer Referenzspannung Vref_hi0 verglichen. Der Ausgang des Komparators Kp wird der Steuereinheit ST zugeführt, wobei alternativ zum Ausführungsbeispiel der Fig. 1 der Komparator Kp und die Referenzspannung Vref_hi0 auch intern in der Steuereinheit ST vorgesehen sein können.

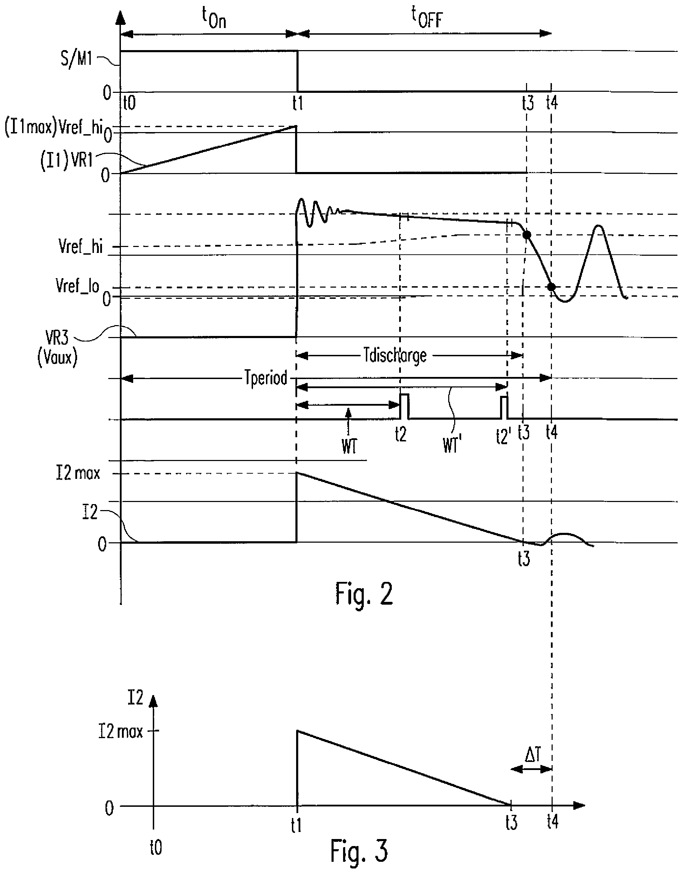

Vorzugsweise ist ein Maximalwert I1max für den primärseitigen Strom I1 vorgesehen. Dieser Maximalwert I1max kann extern dem Betriebsgerät 1 zugeführt werden, oder kann vom Betriebsgerät festgelegt werden. Die Referenzspannung Vref_hi0 ist nun vorzugsweise so eingestellt, dass wenn der primärseitige Strom I1 diesen Maximalwert I1max erreicht, dann das gemessene Signal VR1 der Referenz Vref_hi0 entspricht. Der Ausgang des Komparators Kp liefert dem Betriebsgerät 1 somit eine Information, ob der primärseitige Strom I1 sich unterhalb des Maximalwerts I1max befindet, oder ob der primärseitige Strom I1 den Maximalwert I1max erreicht hat. Das Betriebsgerät 1 ist somit in der Lage, den Schalter M1 zu öffnen, sobald der primärseitige Strom I1 den Maximalwert I1max bzw. sobald das gemessene Signal VR1 die Referenz Vref_hi0 erreicht bzw. überschreitet. Der typische zeitliche Verlauf der für den Strom I1 repräsentativen Spannung VR1 ist in Fig. 2 gezeigt.

Die Ansteuerung des steuerbaren Schalters M1 erfolgt durch die Steuereinheit ST des Betriebsgeräts, vorzugsweise ohne galvanische Trennung zwischen dem Schalter M1 und der Steuereinheit ST. Die Steuereinheit ST steuert hierbei den Schalter M1 alternierend an, wobei sich das Tastverhältnis TV bzw. der sogenannte Duty-Cycle für den Schaltbetrieb des Schalters M1 wie folgt berechnen lässt:

TV = ton / (Tperiod), wobei Tperiod die Gesamtdauer eines vollständigen Schaltzyklus für den Schalter M1 bezeichnet und ton der Einschaltzeitdauer des Schalters M1 entspricht.

Der Transformator bzw. der Übertrager T umfasst neben der Primärwicklung N1 und der Sekundärwicklung N2 noch eine Hilfswicklung oder Erfassungswicklung Naux, die sich vorzugsweise auf der Primärseite des Transformators T befindet. An der Hilfswicklung Naux liegt eine Spannung Vaux an, welche die Ausgangsspannung Vout wiedergibt. Insbesondere gilt Vaux = K1 * Vout, wobei K1 eine Konstante ist, die von den Wicklungsverhältnissen der Sekundärwicklung und der Hilfswicklung abhängt.

Parallel zu der Erfassungswicklung Naux ist ein ohmscher Spannungsteiler bestehend aus zwei Widerständen R2, R3 vorgesehen, an dem ein Erfassungssignal bzw. eine Erfassungsspannung VR3 zur Erfassung der Spannung Vaux an der Hilfswicklung Naux abgegriffen wird. Diese Spannung VR3 ist auch repräsentativ für die Ausgangsspannung Vout und proportional zu Letzterer. Das Erfassungssignal VR3 wird der Steuereinheit ST zugeführt. Die Erfassungswicklung Naux und der Spannungsteiler R2, R3 bilden zusammen die Erfassungseinheit 4.

Wenn der Schalter M1 primärseitig eingeschaltet ist, steigt der Strom I1 primärseitig konstant an, was bei der Erfassungseinheit 4 eine konstante negative Spannung Vaux induziert. Wenn der Strom I1 den vorgegebenen Maximalwert I1max erreicht hat, wird der Stromschalter M1 abgeschaltet. Daraufhin springt die Erfassungsspannung Vaux auf einen positiven Wert, oszilliert während einer gewissen Zeitdauer und pendelt sich dann auf einen Spannungswert ein, der der Ausgangsspannung Vout entspricht.

Die Erfassungsspannung VR3 wird vorzugsweise einem ersten Komparator K1 und einem zweiten Komparator K2 zugeführt.

Mit Hilfe des ersten Komparators K1 wird das Erfassungssignal VR3 mit einer ersten Referenzspannung Vref_lo verglichen. Diese Referenzspannung Vref_lo ist vorzugsweise eine Wiedereinschaltschwelle zum Einschalten bzw. Wiedereinschalten des steuerbaren Schalters M1. Wenn das Erfassungssignal VR3 diesen Schwellenwert Vref_lo erreicht bzw. unterschreitet, wird der Schalter M1 primärseitig wieder eingeschaltet. In Fig. 2 ist entsprechend gezeigt, dass dieser Schwellenwert Vref_lo zum Zeitpunkt t4 erreicht wird. Bei Erkennen des Erreichens des Schwellenwerts Vref_lo wird dann erfindungsgemäß vorzugsweise das Steuersignal S/M1 zum Einschalten des Schalters M1 z.B. von Null auf einen positiven Wert erhöht. Insbesondere wird nach jedem Schaltzyklus Tperiod zum Zeitpunkt t4 der Schalter eingeschaltet. In Fig. 2 wird indessen das Steuersignal S/M1 zum Zeitpunkt t4 nicht erhöht, um lediglich zu zeigen, wie sich die Erfassungsspannung VR3 verhält, nachdem der Sekundärstrom I2 auf null abgesunken ist.

Somit kann der Schalter M1 von der Steuereinheit ST geschlossen werden, sobald die Spannung an der Hilfswicklung Naux einen entsprechenden unteren Schwellenwert erreicht. Da die Erfassungsspannung VR3 sowohl für die Spannung Vaux an der Hilfswicklung und für die Ausgangsspannung Vout repräsentativ ist, wird also der Schalter M1 wieder geschlossen, sobald die Ausgangsspannung Vout einen entsprechenden unteren Schwellenwert erreicht hat.

Die Referenzspannung Vref_lo ist vorzugsweise eine feste Komparatorschwelle, die beispielsweise vorgegeben werden kann. Die Referenzspannung Vref_lo kann z.B. im Betriebsgerät 1 fest vordefiniert sein, oder sie kann extern über eine entsprechende Schnittstelle des Betriebsgeräts 1 vorgegeben werden. Nach der Vorgabe eines bestimmten Wertes Vref_lo bleibt diese Referenzspannung vorzugsweise konstant. Zumindest bleibt die Referenz Vref_lo für die Zeitdauer von mehreren Schaltzyklen des Schalters M1 konstant. Insbesondere ist die Referenz Vref_lo unabhängig von Rückführwerten oder Messwerten aus dem Bereich des Betriebsgeräts 1 oder des LED-Moduls 5. Die Referenzspannung Vref_lo ist vorzugsweise kleiner als die Hälfte, insbesondere kleiner als 20%, 10% oder 5% der Erfassungsspannung VR3 im eingeschwungenen Zustand nach Öffnen des Schalters M1.

Der Flyback-Konverter 3 kann bekanntlich gemäß einem kontinuierlichen Strombetrieb (current continuous conduction mode), einem diskontinuierlichen Strombetrieb (current discontinuous conduction mode), oder gemäß einem Betrieb im Grenzbereich zwischen kontinuierlichem und diskontinuierlichem Strom Strombetrieb betrieben werden. Vorzugsweise wird das erfindungsgemäße Betriebsgerät 1 in diesem Grenzbereich, der auch Critical Conduction Modus oder Borderline Modus genannt wird, betrieben. Im Critical Conduction Modus wird der Schalter M1 des Flyback-Konverters 3 eingeschaltet, sobald erkannt wird, dass der Strom durch die Sekundärwicklung N2 auf Null abgesunken ist. Vorzugsweise wird der Schalter M1 eingeschaltet, wenn die Erfassungsspannung VR3 die untere Referenzspannung Vref_lo erreicht bzw. unterschreitet.

Der Strom I2 durch die Sekundärwicklung N2 ist ein Maß für den Strom durch die LEDs bzw. durch das LED-Modul 5. Der Mittelwert des Stroms I2 entspricht dem Mittelwert des Stroms durch die LEDs. Zur Ausführung einer genauen Regelung des Stroms durch die LEDs ist es wichtig, die Zeitdauer Tdischarge zwischen dem Ausschalten des Schalters M1 und dem Absinken des Stroms I2 auf Null möglichst genau zu erfassen. Der Mittelwert des Stroms durch die Sekundärwicklung N2 kann nämlich wie folgt definiert werden:

I2 = I2max * 1/2 * Tdischarge / Tperiod, wobei I2max der Maximalwert des Stroms I2 unmittelbar nach dem Ausschalten des Schalters darstellt und Tperiod die Gesamtdauer eines vollständigen Schaltzyklus für den Schalter M1. In Fig. 2 erstreckt sich Tperiod zwischen t0 und t4, Tdischarge zwischen t1 und t3.

Der zweite Komparator K2 dient nunmehr insbesondere zur genauen Erfassung der Entlade-Zeitdauer Tdischarge der Sekundärwicklung N2 zwischen dem Abschalten des Schalters M1 und dem Erreichen des Nullpunkts durch den sekundärseitigen Strom I2, wobei beim Nulldurchgang des Stroms I2 die Spannung Vaux an der Hilfswicklung Naux bzw. die Erfassungsspannung VR3 abknickt. Der zweite Komparator K2 vergleicht die Erfassungsspannung VR3 mit einer veränderbaren Referenzspannung in Form eines adaptiven Schwellenwerts Vref_hi.

Die Erfassungsspannung wird auch einer Sample-and-Hold-Schaltung S+H zugeführt, wobei Letztere die analogen Werte der Erfassungsspannung kurzzeitig halten kann. Diese Sample-and-Hold-Schaltung S+H wird insbesondere eingesetzt, um die bei ausgeschaltenem Schalter eingeschwungene Ausgangsspannung abzutasten. Der Ausgang der Sample-and-Hold-Schaltung wird einem Analog-Digital-Umsetzer ADC zugeführt zur Umsetzung der analogen Werte in digitale Werte.

Vorzugsweise ist der adaptive Schwellenwert Vref_hi abhängig von dem durch die Sample-and-Hold-Schaltung S+H und die den Analog-Digital-Umsetzer ADC ermittelten Wert der Ausgangsspannung Vout im eingeschwungenen Zustand. Diese Abhängigkeit wird in Fig. 1 durch den Pfeil 8 dargestellt.

Erfindungsgemäß wird also eine adaptive Wiedereinschaltschwelle Vref_hi gewählt. Beispielsweise kann die adaptive Wiedereinschaltschwelle Vref_hi als einem gewissen Prozentsatz unterhalb der eingeschwungenen Spannung gewählt werden, z.B. 95%, 90% oder 80% des Werts der eingeschwungenen Spannung VR3.

Wie in Fig. 2 gezeigt, kann mit Hilfe der Referenzspannung Vref_lo und des ersten Komparators K1 der Zeitpunkt t4 bestimmt werden, zu welchem das Betriebsgerät 1 den Schalter M1 wieder einschaltet.

Diese Referenzspannung Vref_lo ist insbesondere kleiner als der adaptive Schwellenwert Vref_hi. Die Referenzspannung Vref_lo ist zudem vorzugsweise ein nicht veränderbarer Wert. Das Wiedereinschalten des Schalters M1 abhängig vom ersten Komparator K1 ist insofern vorteilhaft, dass z.B. bei Erreichen der niedrigen Referenzspannung Vref_lo auch die Netzspannung Vmains niedrig ist, so dass die Verluste im Schalter M1 niedrig gehalten werden können.

Das Unterschreiten der adaptiv, und somit höher gewählten Wiedereinschaltschwelle Vref_hi wird also vorzugsweise nur zur genaueren Bestimmung der Entlade-Zeitdauer Tdischarge für die indirekte Bestimmung des sekundärseitigen Stroms I2 genommen. Das tatsächliche Wiedereinschalten des primärseitigen Schalters erfolgt indessen vorzugsweise erst dann, wenn im weiteren Verlauf des Abfallens der Erfassungsspannung VR3 der weiterhin fix vorgegebene Schwellewert Vref_lo unterschritten wird.

Fig. 2 zeigt den Verlauf von verschiedenen Größen des Betriebsgeräts 1 über eine Periode Tperiod des Flyback-Konverters 3, d.h. während der Zeitdauer eines vollständigen Schaltzyklus des Schalters bestehend aus einer Einschaltzeitdauer Ton des Schalters M1 und eine darauffolgende Ausschaltzeitdauer Toff des Schalters M1. Insbesondere wird der Verlauf von verschiedenen Größen nach dem Ausführungsbeispiel des Betriebsgeräts 1 gemäß Fig. 1 gezeigt.

Bezug nehmend auf Figuren 1 und 2 erzeugt die Steuereinheit ST das Steuersignal S/M1 zum Ansteuern des Schalters M1. Während der Zeitdauer ton wird der Schalter M1 von der Steuereinheit ST mittels des Steuersignals S/M1 geschlossen. Danach verursacht das Steuersignal S/M1 das Öffnen des Schalters M1 während einer Ausschaltzeitdauer toff. Der Schalter M1 wird abwechselnd ein- und ausgeschaltet, so dass im Betrieb nach der in Fig. 2 gezeigten Ausschaltzeitdauer toff wieder eine Einschaltzeitdauer ton erfolgt. Die Einschaltzeitdauer ton und die folgende Ausschaltzeitdauer toff bilden zusammen eine Periode Tperiod des Betriebsgeräts 1 bzw. des Flyback-Konverters 3. Im Betrieb ergibt sich somit eine Abfolge von mehreren Perioden Tperiod.

Der primärseitige Strom I1 durch die Primärwicklung N1 und durch den Schalter M1 wird von der Messspannung VR1 wiedergegeben, wobei diese Messung am Messwiderstand R1 abgegriffen wird. Während der Einschaltzeitdauer ton, d.h. während das Steuersignal S/M1 einen hohen Pegel aufweist, fließt ein Strom durch die Primärwicklung N1. Dieser primärseitige Strom I1 steigt linear ausgehend von einem Nullwert an. Entsprechend steigt auch das gemessene Signal VR1 während der Einschaltzeitdauer ton, wie in Fig. 2 gezeigt.

Sobald zum Zeitpunkt t1 das für den primärseitigen Strom I1 repräsentative Messsignal VR1 den Schwellenwert Vref_hi0 erreicht, veranlasst die Steuereinheit ST ein Öffnen des Schalters M1. Folglich wird die Diode D1 in Durchlassrichtung betrieben und die im Transformator während der Einschaltzeitdauer ton gespeicherte Energie wird auf die Sekundärseite des Transformators T übertragen. Zum Zeitpunkt t1 steigt somit der sekundärseitige Strom I2 durch die Diode D1 auf einen positiven Wert und beginnt linear wieder abzunehmen.

Fig. 2 zeigt auch den Verlauf der Spannung Vaux und der Hilfswicklung Naux bzw. der gemessenen Spannung VR3, wobei diese Spannungen zueinander proportional sind. Während der Einschaltzeitdauer ton weist die erfasste Spannung einen konstanten negativen Wert. Zum Zeitpunkt t1 des Einschaltens des Schalters M1 springt die Erfassungsspannung auf einen positiven Wert, oszilliert während einer gewissen Zeitdauer und pendelt sich dann auf einen Spannungswert ein, der der Ausgangsspannung Vout entspricht. Die nach dem Oszillieren eingeschwungene Erfassungsspannung kann dabei konstant bleiben oder eine konstante negative Steigung aufweisen.

Nach dem stationären Zustand mit konstantem Wert oder mit konstanter Steigung weist diese eingeschwungene Erfassungsspannung ein Abknicken auf. Vorzugsweise erfolgt dieses Abknicken, wenn der Strom I2 durch die Sekundärwicklung N2 auf Null absinkt. Nach dem Abknicken oszilliert die Erfassungsspannung Vaux, in dem sie abwechselnd vorzugsweise auf Null absinkt und wieder ansteigt.

Der Schwellenwert Vref_hi zum Erfassen der Entlade-Zeitdauer Tdischarge ist vorzugsweise abhängig von dem Wert der eingeschwungenen Erfassungsspannung VR3. Hierzu kann z.B. in der Steuereinheit ST eine Wartezeit WT hinterlegt sein. Diese Wartezeit WT ist in Fig. 2 dargestellt und definiert die Zeitdauer, die nach Abschalten des Schalters M1 abgewartet werden muss, bevor die Erfassungsspannung VR3 zwecks Bestimmung des Schwellenwerts Vref_hi erfasst bzw. abgetastet wird. In Fig. 2 ist gezeigt, dass die Erfassungsspannung VR3 zu folgendem Zeitpunkt t2 erfolgt: t2 = t1 + WT, wobei t1 der Zeitpunkt des Abschaltens des Schalters M1 definiert.

Die Wartezeit WT, die nach dem Abschalten des Schalters eingehalten werden muss, um sicher zu sein, dass die Ausgangsspannung bzw. die Erfassungsspannung VR3 eingeschwungen ist, kann wie bereits gesehen fest vorgegeben sein.

Alternativ, kann diese Wartezeit WT nur zu Beginn des LED-Betriebs fest vorgegeben. Sobald mindestens ein Ein- und Ausschaltzyklus durchgeführt wurden, kann dann diese Warte zeit WT adaptiv neu festgelegt werden. Z.B. kann die Wartezeit eines bestimmten Zyklus einen bestimmten Prozentsatz der Entlade-Zeitdauer Tdischarge des vorigen Zyklus betragen. Fig. 2 zeigt z.B. dass zu Beginn des LED-Betriebs die Ausgangsspannung bzw. die Erfassungsspannung VR3 nach der vorgegebenen Wartezeit WT erfasst wird. Danach in einem folgenden Zyklus wird eine Wartezeit WT' abgewartet, wobei diese Wartezeit WT' z.B. x% der Entlade-Zeitdauer Tdischarge beträgt, z.B. 90% oder 80%.

Nach einer weiteren Ausführungsform der Erfindung ist es vorgesehen, dass wiederum abhängig von dem Sampling bzw. Abtasten der eingeschwungenen Spannung Vaux bei ausgeschaltenem Schalter adaptiv, nämlich abhängig von diesem Sampling, die Entlade-Zeitdauer Tdischarge für die indirekte Bestimmung des sekundärseitigen Stroms I2 dadurch zu bestimmen, dass das Unterschreiten der Referenzspannung Vref_lo erfasst wird, und dann ein von dem Sampling-Wert abhängige Korrektur-Zeitdauer $\Delta T$ abgezogen wird, sozusagen als adaptiver Korrekturfaktor.

Diese Ausführungsform ist z.B. dargestellt in Fig. 3. Hierbei wird zunächst zur Bestimmung der Entlade-Zeitdauer Tdischarge der Zeitpunkt t4 des Unterschreitens der Referenzspannung Vref_lo berücksichtigt. Als Korrekurfaktor wird dann ein Korrekturwert $\Delta T$ ermittelt, der von der abgetasteten Referenzspannung VR3 abhängt. Diese Korrekturwert $\Delta T$ können z.B. Erfahrungswerte sein, die in einem Speicher bzw. in einer Look-Up-Tabelle innerhalb der Steuereinheit ST gespeichert werden können. Die Korrespondenz zwischen der abgetasteten Referenzspannung VR3 und dem daraus folgenden Korrekturwert $\Delta T$ ist in diesem Speicher bzw. in dieser Look-Up-Tabelle gespeichert.

Der Korrekturwert $\Delta T$ wird dem Zeitpunkt t4 abgezogen, um den Zeitpunkt t3 des Nullstroms erfindungsgemäß zu ermitteln:

$$t3 = t4 - \Delta T.$$

Gemeinsamer Nenner dieser Ausführungsbeispiele ist also, dass die Entlade-Zeitdauer Tdischarge vorzugsweise unter Berücksichtigung der Erfassung der Erfassungsspannung bzw. der Ausgangsspannung im eingeschwungenen Zustand bestimmt wird.

Gemäß einer weiteren Ausführungsform kann der Komparator in Wegfall gebracht werden. Dafür kann wird das Abknicken der Erfassungsspannung VR3 zum Zeitpunkt t3 nach dem stationären Zustand mit einem schnellen Analog-Digital-Umsetzer direkt erfasst werden. In dieser Ausführungsform wird dann vorzugsweise der in Fig. 1 gezeigte Komparator K2 nicht benötigt, und durch einen Analog-Digital-Umsetzer (nicht gezeigt) ersetzt. Die Steuereinheit ST überprüft die von diesem Analog-Digital-Umsetzer erzeugten digitalen Daten. Sobald die Erfassungsspannung VR3 sich im eingeschwungenen Zustand befindet, wird von der Steuereinheit ST ein mögliches Abknicken der Erfassungsspannung VR3 auf Basis dieser digitalen Daten erfasst. Der erfasste Zeitpunkt des Abknicken wird dann von der Steuereinheit ST als Nulldurchgang des Stroms I2 ermittelt. Anhand der Zeitdauer zwischen dem Abschalten des Schalters M1 und dem Abknicken der Erfassungsspannung kann letzlich die Steuereinheit ST den sekundärseitigen Strom ermitteln, wie oben erläutert.

In dem dargestellten Ausführungsbeispiel der Fig. 1 wird die Ausgangsspannung Vout indirekt ermittelt, nämlich als die Spannung, die sich stationär an der Hilfswicklung Naux im ausgeschalteten Schalterzustand einstellt. Erfindungsgemäß kann auch eine direktere Erfassung der Ausgangsspannung vorgesehen sein, insbesondere über die Erfassung eines sekundärseitigen Parameters, z.B. über die Erfassung der Ausgangsspannung Vout, und dann Übertragung über die galvanische Trennung, beispielsweise mittels Optokoppler. Der gemeinsame Nenner der Erfindung ist also, dass die Ausgangsspannung Vout direkt oder indirekt, primärseitig oder sekundärseitig, erfasst wird und in die Berechnung der Entlade-Zeitdauer Tdischarge als Größe einfließt.

Wie gesagt, dies dient nur zur korrekten Berechnung der Entlade-Zeitdauer Tdischarge, um somit wiederum indirekt den ausgangsseitigen mittleren Strom zu berechnen. Diese Erfassung hat indessen vorzugsweise keinen Einfluss auf das tatsächliche Wiedereinschalten des primärseitigen Schalters.

Wichtig ist, dass vorzugsweise gemäß der Erfindung keine den Strom durch die LEDs direkt oder indirekt wiedergebende Größe von der Sekundärseite auf die Primärseite zurückgeführt wird. Nur bei Wegfall dieser Überbrückung der galvanischen Trennung für diese Messgröße macht die indirekte Bestimmung des LED Stroms unter Einbeziehung der Ausschaltzeitdauer Toff Sinn.

## Patentansprüche

1. Betriebsgerät (1) zum Betreiben von Leuchtmitteln, aufweisend:

   - einen potentialgetrennten getakteten Konverter (3) mit einem Übertrager (T) aufweisend eine Primärwicklung (N1) und eine Sekundärwicklung (N2), und einem primärseitig angeordneten steuerbaren Schalter (Ml), wobei der Konverter (3) primärseitig mit einer Versorgungsspannung versorgbar ist und die Leuchtmittel sekundärseitig über eine Ausgangsspannung (Vout) des Konverters (3) versorgbar sind,
   - Mittel (4) zur direkten oder indirekten Erfassung der Ausgangsspannung (Vout), und
   - eine Steuereinheit (ST) zur Ansteuerung des Schalters (M1),

   wobei bei ausgeschaltetem Schalter (Ml) der Sekundär-Strom (I2) durch die Sekundärwicklung (N2) ausgehend von einem positiven Wert (I2max) linear abfällt,
   wobei die Steuereinheit (ST) dazu ausgebildet ist, zur Regelung des Sekundär-Stroms (I2) eine Entlade-Zeitdauer (Tdischarge) zwischen einem Ausschalten des Schalters (Ml) und einem folgenden Absinken des Sekundär-Stroms (I2) auf Null zu erfassen,
   **dadurch gekennzeichnet, dass**
   die Steuereinheit (ST) dazu ausgebildet ist, die Entlade-Zeitdauer (Tdischarge) abhängig von einem Vergleich einer erfassten Ausgangsspannung mit einem adaptiven Schwellenwert (Vref_hi) zu ermitteln.

2. Betriebsgerät nach Anspruch 1,
   wobei die Entlade-Zeitdauer (Tdischarge) unter Berücksichtigung der Erfassung einer nach dem Ausschalten des Schalters (Ml) eingeschwungenen Ausgangsspannung (Vout) ermittelt wird.

3. Betriebsgerät nach Anspruch 1,
   wobei der adaptive Schwellenwert (Vref_hi) abhängig von einem Wert der nach dem Ausschalten des Schalters (Ml) eingeschwungenen Ausgangsspannung (Vout) ist.

4. Betriebsgerät nach Anspruch 3,
   wobei die Steuereinheit (ST) dazu ausgebildet ist, den Schwellenwert (Vref_hi) als einem gewissen Prozentsatz unterhalb des Werts der nach dem Ausschalten des Schalters (Ml) eingeschwungenen Ausgangsspannung (Vout) zu wählen.

5. Betriebsgerät nach Anspruch 1 oder 2,
   wobei zur Erfassung der Entlade-Zeitdauer (Tdischarge) zunächst ein Zeitpunkt (t4) des Unterschreitens eines festen Schwellenwerts (Vref_lo) durch die erfasste Ausgangsspannung (Vout) ermittelt wird, und dann dieser Zeitpunkt (t4) durch eine adaptive Zeitdauer ($\Delta T$) korrigiert wird.

6. Betriebsgerät nach Anspruch 5,
   wobei die adaptive Zeitdauer ($\Delta T$) abhängig von einem erfassten Wert der nach dem Ausschalten des Schalters (Ml) eingeschwungenen Ausgangsspannung (Vout) ist.

7. Betriebsgerät (1) nach Anspruch 1, aufweisend:

   einen Analog-Digital-Umsetzer zur Umsetzung der analog erfassten Ausgangsspannung (Vout) in digitale Werte,
   wobei die Steuereinheit (ST) dazu ausgebildet ist, zur Regelung des Sekundär-Stroms (I2) eine Entlade-Zeitdauer (Tdischarge) zwischen einem Ausschalten des Schalters (Ml) und einem folgenden Absinken des Sekundär-Stroms (I2) auf Null abhängig von den digitalen Werten zu erfassen.

8. Verfahren zum Betreiben von Leuchtmitteln mit Hilfe eines potentialgetrennten getakteten Konverters (3) mit einem Übertrager (T) aufweisend eine Primärwicklung (N1) und eine Sekundärwicklung (N2), und einem primärseitig angeordneten steuerbaren Schalter (Ml),
   wobei bei ausgeschaltetem Schalter (Ml) der Sekundär-Strom (I2) durch die Sekundärwicklung (N2) ausgehend von einem positiven Wert (I2max) linear abfällt,
   wobei der Konverter (3) primärseitig mit einer Versorgungsspannung versorgt wird, und die Leuchtmittel sekundärseitig über eine Ausgangsspannung (Vout) des Konverters (3) versorgt werden,

wobei zur Regelung des Sekundär-Stroms (I2) eine Entlade-Zeitdauer (Tdischarge) zwischen einem Ausschalten des Schalters (MI) und einem folgenden Absinken des Sekundär-Stroms (I2) auf Null erfasst wird, **dadurch gekennzeichnet, dass** die Entlade-Zeitdauer (Tdischarge) abhängig von einem Vergleich einer erfassten Ausgangsspannung (Vout) mit einem adaptiven Schwellenwert (Vref_hi) ermittelt wird.

9. Verfahren nach Anspruch 8,
   wobei die Ausgangsspannung (Vout) direkt oder indirekt erfasst wird und in digitale Werte umgesetzt wird, und
   wobei zur Regelung des Sekundär-Stroms (I2) die Entlade-Zeitdauer (Tdischarge) zwischen einem Ausschalten des Schalters (MI) und einem folgenden Absinken des Sekundär-Stroms (I2) auf Null abhängig von den digitalen Werten erfasst wird.

**Claims**

1. An operating device (1) for operating lighting means, having:

   - a potential-isolated clocked converter (3), having a transformer (T), which has a primary winding (N1) and a secondary winding (N2), and a controllable switch (M1) arranged on the primary side, wherein the converter (3) can be supplied with a supply voltage on the primary side and the lighting means can be supplied on the secondary side by means of an output voltage (Vout) of the converter (3),
   - means (4) for directly or indirectly sensing the output voltage (Vout), and
   - a control unit (ST) for controlling the switch (M1), wherein the secondary current ($I_2$) through the secondary winding (N2) linearly drops, starting from a positive value ($I_2$max), while the switch (M1) is switched off,

   wherein the control unit (ST) is designed to sense a discharge duration (Tdischarge) between a switch-off of the switch (M1) and a subsequent drop in the secondary current ($I_2$) to zero in order to control the secondary current ($I_2$),
   **characterized in that**
   the control unit (ST) is designed to determine the discharge duration (Tdischarge) depending on a comparison of a sensed output voltage with an adaptive threshold value (Vref_hi).

2. An operating device according to Claim 1,
   wherein the discharge duration (Tdischarge) is determined taking into consideration the sensing of a steady output voltage (Vout) after the switch-off of the switch (M1).

3. An operating device according to Claim 1,
   wherein the adaptive threshold value (Vref-hi) is dependent on a value of the steady output voltage (Vout) after the switch-off of the switch (M1).

4. An operating device according to Claim 3,
   wherein the control unit (ST) is designed to select the threshold value (Vref_hi) as a certain percentage below the value of the steady output voltage (Vout) after the switch-off of the switch (M1).

5. An operating device according to Claim 1 or 2,
   wherein in order to sense the discharge duration (Tdischarge) initially a point in time (t4) of the undershooting of a fixed threshold value ($Vref\_1_0$) is determined by the sensed output voltage (Vout), and then this point in time (t4) is corrected by an adaptive time duration ($\Delta T$).

6. An operating device according to Claim 5,
   wherein the adaptive time duration ($\Delta T$) is dependent on a sensed value of the steady output voltage (Vout) after the switch-off of the switch (M1).

7. An operating device (1) according to Claim 1, having:

   an analog to digital converter for converting the output voltage (Vout) sensed in analog form into digital values,
   wherein the control unit (ST) is designed to sense a discharge duration (Tdischarge) between a switch-off of the switch (M1) and a subsequent drop in the secondary current ($I_2$) to zero depending on the digital values in order to control the secondary current ($I_2$).

8. A method for operating lighting means
   using a potential-isolated clocked converter (3), having a transformer (T), which has a primary winding (N1) and a secondary winding (N2), and a controllable switch (M1) arranged on the primary side,
   wherein the secondary current ($I_2$) through the secondary winding (N2) linearly drops, starting from a positive value ($I_2$max), while the switch (M1) is switched off,
   wherein the converter (3) is supplied with a supply voltage on the primary side, and the lighting means are supplied on the secondary side by means of an output voltage (Vout) of the converter (3),
   wherein a discharge duration (Tdischarge) is sensed between a switch-off of the switch (M1) and a subsequent drop in the secondary current ($I_2$) to zero in order to control the secondary current (12), **characterized in that**
   the discharge duration (Tdischarge) is determined depending on a comparison of a sensed output voltage (Vout) with an adaptive threshold value (Vref_hi).

9. A method according to Claim 8,
wherein the output voltage (Vout) is directly or indirectly sensed and is converted into digital values, and
wherein the discharge duration (Tdischarge) is sensed between a switch-off of the switch (M1) and a subsequent drop in the secondary current (I2) to zero depending on the digital values in order to control the secondary current ($I_2$).

**Revendications**

1. Appareil de commande (1) pour la commande de moyens d'éclairage, comprenant :

   - un convertisseur cadencé à potentiel séparé (3) avec un transmetteur (T) comprenant un enroulement primaire (N1) et un enroulement secondaire (N2) et un commutateur contrôlable (M1) disposé côté primaire, le convertisseur (3) pouvant être alimenté côté primaire avec une tension d'alimentation et les moyens d'éclairage peuvent être alimentés côté secondaire par l'intermédiaire d'une tension de sortie (Vout) du convertisseur (3),
   - des moyens (4) pour la mesure directe ou indirecte de la tension de sortie (Vout) et
   - une unité de commande (ST) pour le contrôle du commutateur (M1),

   moyennant quoi, lorsque le commutateur (M1) est désactivé, le courant du secondaire (I2) à travers l'enroulement secondaire (N2) chute de manière linéaire à partir d'une valeur positive (I2max),
   l'unité de commande (ST) étant conçue, pour la régulation du courant secondaire (I2), pour mesurer une durée de décharge (Tdischarge) entre une désactivation du commutateur (M1) et une chute suivante du courant secondaire (I2) à zéro,
   **caractérisé en ce que**
   l'unité de commande (ST) est conçue pour déterminer la durée de décharge (Tdischarge) en fonction d'une comparaison d'une tension de sortie mesurée avec une valeur seuil adaptative (Vref_hi).

2. Appareil de commande selon la revendication 1,
la durée de décharge (Tdischarge) étant déterminée en tenant compte de la mesure d'une tension de sortie (Vout) appliquée après la désactivation du commutateur (M1).

3. Appareil de commande selon la revendication 1,
la valeur seuil adaptative (Vref_hi) dépendant d'une valeur de la tension de sortie (Vout) appliquée après la désactivation du commutateur (M1).

4. Appareil de commande selon la revendication 3,
l'unité de commande (ST) étant conçue pour sélectionner la valeur seuil (Vref_hi) en tant que pourcentage déterminé en dessous de la valeur de la tension de sortie (Vout) appliquée après la désactivation du commutateur (M1).

5. Appareil de commande selon la revendication 1 ou 2,
moyennant quoi, pour la mesure de la durée de décharge (Tdischarge), un moment (t4) du passage en dessous d'une valeur seuil fixe (Vref_lo) est d'abord déterminé par la tension de sortie (Vout) mesurée puis ce moment (t4) est corrigé par une durée adaptative (ΔT).

6. Appareil de commande selon la revendication 5,
la durée adaptative (ΔT) dépendant d'une valeur mesurée de la tension de sortie (Vout) appliquée après la désactivation du commutateur (M1).

7. Appareil de commande (1) selon la revendication 1, comprenant :

   un convertisseur analogique-numérique pour la conversion de la tension de sortie analogique (Vout) mesurée en valeurs numériques,
   l'unité de commande (ST) étant conçue, pour la régulation du courant secondaire (I2), pour mesurer une durée de décharge (Tdischarge) entre une désactivation du commutateur (M1) et une chute suivante du courant secondaire (I2) à zéro en fonction des valeurs numériques.

8. Procédé de commande de moyens d'éclairage à l'aide d'un convertisseur cadencé à potentiel séparé (3) avec un transmetteur (T) comprenant un enroulement primaire (N1) et un enroulement secondaire (N2) et un commutateur contrôlable (M1) disposé côté primaire,
moyennant quoi, lorsque le commutateur (M1) est désactivé, le courant secondaire (I2) à travers l'enroulement secondaire (N2) chute de manière linéaire à partir d'une valeur positive (I2max),
le convertisseur (3) étant alimenté côté primaire avec une tension d'alimentation et les moyens d'éclairage étant alimentés côté secondaire par l'intermédiaire d'une tension de sortie (Vout) du convertisseur (3),
moyennant quoi, pour la régulation du courant secondaire (I2), une durée de décharge (Tdischarge) entre une désactivation du commutateur (M1) et une chute suivante du courant secondaire (I2) à zéro est mesurée,
**caractérisé en ce que**
la durée de décharge (Tdischarge) est déterminée en fonction d'une comparaison d'une tension de sortie (Vout) mesurée avec une valeur seuil adaptative (Vref_hi).

9. Procédé selon la revendication 8,
la tension de sortie (Vout) étant mesurée directement ou indirectement et converti en valeurs numériques et
pour la régulation du courant secondaire (I2), la durée de décharge (Tdischarge) entre une désactivation du commutateur (M1) et une chute suivante du courant secondaire (12) à zéro est mesurée en fonction des valeurs numériques.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130257305 A1